# EUROPÄISCHE PATENTSCHRIFT

(11) **EP 0 837 820 B1**
(45) Veröffentlichungstag und Bekanntmachung des Hinweises auf die Patenterteilung: **03.02.1999**
(21) Anmeldenummer: 96920826.3
(22) Anmeldetag: 18.06.1996
(51) Int. Cl.: B64D 33/08

(54) **TURBOPROP-TRIEBWERK MIT EINEM LUFT-ÖLKÜHLER**
TURBOPROP ENGINE WITH AN AIR-OIL COOLER
GROUPE TURBO-PROPULSEUR AVEC ECHANGEUR THERMIQUE HUILE-AIR

(30) Priorität: 07.07.1995 DE 19524731
(43) Veröffentlichungstag der Anmeldung: 29.04.1998
(73) Patentinhaber: BMW ROLLS-ROYCE GmbH, 61402 Oberursel (DE)
(72) Erfinder: STEINER, Kurt, D-15834 Rangsdorf (DE)
(74) Vertreter: Schmidt, Günter, Dipl.-Ing.
(86) Internationale Anmeldenummer: EP9602634
(87) Internationale Veröffentlichungsnummer: WO9702985

(56) Entgegenhaltungen:
- EP-A- 0 283 578
- FR-A- 864 010
- US-A- 2 268 183
- US-A- 2 593 541

## Beschreibung

Die Erfindung betrifft ein Turboprop-Triebwerk mit einer in der Triebwerks-Gondel vorgesehenen Eintrittsöffnung für Kühlluft für den Gondel-Innenraum und für einen in diesem angeordneten Flüssigkeits-Luft-Wärmetauscher, mit einer Kühlluft-Fördereinrichtung, sowie mit einem den Flüssigkeits-Luft-Wärmetauscher aufnehmenden und die Wärmetauscher-Abluft abführenden Luftführungskanal.

Bekannt ist ein derartiges Turboprop-Triebwerk aus der US-A-2,593,541. Hierbei gelangt der für einen Luft-Ölkühler vorgesehene Luftstrom auf direktem Wege von einer Eintrittsöffnung in der Triebwerks-Gondel zum Luft-Ölkühler. Die Ölkühler-Abluft wird über den Turbinen-Abluftkanal abgeführt, wobei die entsprechende Einleitung des Kühlluftstromes in den Turbinen-Abluftkanal ejektorartig ausgebildet ist, so daß in Form dieses Ejektors eine Kühlluft-Fördereinrichtung vorliegt. Sinnvoll ist eine derartige Kühlluft-Fördereinrichtung für diejenigen Betriebsfälle des Turboprop-Triebwerkes, in denen das mit diesem Triebwerk ausgestattete Flugzeug am Boden dahinrollt, insbesondere, wenn ein Dahinrollen nach rückwärts erfolgt.

Ein weiteres Turboprop-Triebwerk mit einem Flüssigkeits-Luft-Wärmetauscher, insbesondere Luft-Ölkühler, ist in der EP 0 514 119 A1 gezeigt. Hier ist der Luft-Ölkühler im Bereich der Eintrittsöffnung angeordnet, so daß die Kühlung des Gondel-Innenraumes mittels des Ölkühler-Abluftstromes erfolgt. Die Ölkühler-Abluft umströmt dabei die zu kühlenden in der Triebwerks-Gondel angeordneten Aggregate und wird anschließend ebenfalls über den Turbinen-Abluftkanal abgeführt, wobei abermals die entsprechende Einleitung des Kühlluftstromes in den Turbinen-Abluftkanal ejektorartig ausgebildet ist.
Unter anderem bei hohen Außentemperaturen kann dabei der Ölkühler-Abluftstrom derart hohe Temperaturen annehmen, daß die damit beaufschlagten in der Triebwerks-Gondel angeordneten Aggregate geschädigt werden könnten.

Maßnahmen aufzuzeigen, mit Hilfe derer ein in der Triebwerks-Gondel angeordnetes Aggregat sicher gekühlt und dabei auch ein ausreichend intensiver Luftstrom durch den Flüssigkeits-Luft-Wärmetauscher geführt wird, ist Aufgabe der vorliegenden Erfindung.
Die Lösung dieser Aufgabe ist dadurch gekennzeichnet, daß sich an die Kühlluft-Eintrittsöffnung ein Luftleitkanal anschließt, der auf zumindest ein zu kühlendes Aggregat hingerichtet ist, und daß die Kühlluft-Fördereinrichtung als ein dem Wärmetauscher vorgelagertes, im Luftführungskanal angeordnetes Gebläse ausgebildet ist. Vorteilhafte Aus- und Weiterbildungen sind Inhalt der Unteransprüche.

Indem der Wärmetauscher bzw. Ölkühler abseits der Eintrittsöffnung angeordnet und eine als Gebläse ausgebildete Kühlluft-Fördereinrichtung vorgesehen ist, kann der durch die Eintrittsöffnung in den Gondel-Innenraum gelangende Kühlluftstrom zunächst in optimaler Weise die zu kühlenden Aggregate beaufschlagen und trifft erst danach auf den Ölkühler auf. Von diesem aus wird dieser dann erwärmte Luftstrom als Ölkühler-Abluftstrom gezielt abgeführt und zwar über einen Luftführungskanal, sodaß jegliche Erwärmung des Gondel-Innenraumes durch die Ölkühler-Abluft praktisch ausgeschlossen ist.
Um dabei den über die Eintrittsöffnung in die Triebwerks-Gondel gelangenden Kühlluftstrom, der durch das Gebläse sicher von ausreichender Intensität ist, gezielt zu den zu kühlenden Aggregaten zu leiten, schließt sich an die Luft-Eintrittsöffnung ein geeignet gestalteter Luftleitkanal an. In diesem oder allgemein an der Kühlluft-Eintrittsöffnung kann ferner eine Abscheidevorrichtung für Wasser und / oder Partikel, die im Gondel-Innenraum Schäden anrichten könnten, vorgesehen sein.

Die als Gebläse ausgebildete Kühlluft-Fördereinrichtung kann elektromotorisch angetrieben sein, was den Vorteil hat, daß auf einfache Weise nur in wenigen Betriebspunkten, nämlich wenn eine separate Kühlluftförderung überhaupt erforderlich ist, die hierzu benötigte Gebläseleistung bereitgestellt werden muß. Da jedoch ein entsprechender Elektromotor auch eine Gewichtserhöhung bedeutet, kann das Gebläse auch mechanisch über die sog. Gearbox, d. h. über die dem Fachmann bekannte Getriebeanordnung für den Hilfsaggregateantrieb der Flug-Gasturbine, angetrieben werden. Hier empfiehlt es sich, zwischen dem Gebläse sowie der entsprechenden Gearbox-Ausgangswelle eine Schaltkupplung vorzusehen, um abermals nur dann das Gebläse antreiben zu müssen, wenn die Förderung eines Kühlluffstromes erforderlich ist.

Näher erläutert wird die Erfindung gehen anhand von drei lediglich grundsätzlich dargestellten bevorzugten Ausführungsbeispielen.
In sämtlichen Figuren, in denen stets ein Turboprop-Triebwerk im Längsschnitt vereinfacht dargestellt ist, sind gleiche Bauelemente mit gleichen Bezugsziffern bezeichnet.

So trägt eine in der Triebwerks-Gondel 1 angeordnete Gasturbine die Bezugsziffer 2. Diese Gasturbine 2 treibt über ein Getriebe 3 einen Propeller 4 an. Da im Getriebe 3 eine relativ hohe Leistung übersetzt wird, ist eine Kühlung des Getriebeöles erforderlich. Hierzu ist ein Ölkühler 5 im Gondel-Innenraum 6 angeordnet.

Die erforderliche Kühlluft erhält der Ölkühler 5 bzw. allgemein der Luft-Fluid-Wärmetauscher 5 über eine in der Triebwerks-Gondel 1 vorgesehene Kühlluft-Eintrittsöffnung 7, die unter strömungsdynamischen Gesichtspunkten optimiert ausgebildet sein kann, beispielsweise wie gezeigt in Form einer einen herangelangenden Luftstrom teilweise abschöpfenden Leitschaufel. An diese Eintrittsöffnung 7 schließt sich ein Luftleitkanal 8 an, über den der abgeschöpfte Kühlluftstrom den in der Triebwerks-Gondel 1 angeordneten und zu kühlenden Aggregaten - diese sind nicht näher dargestellt und allgemein mit der Bezugsziffer 9 bezeichnet - zugeführt wird.

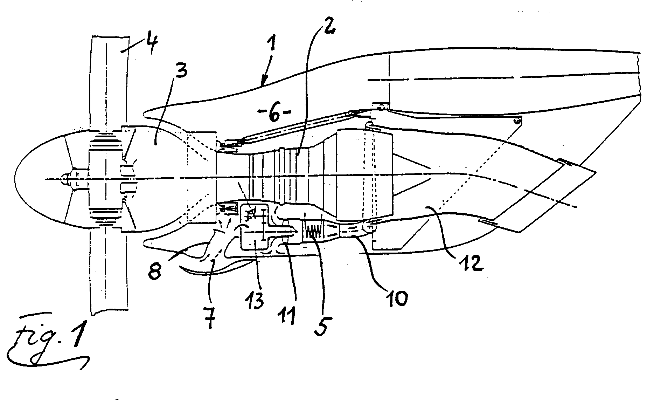

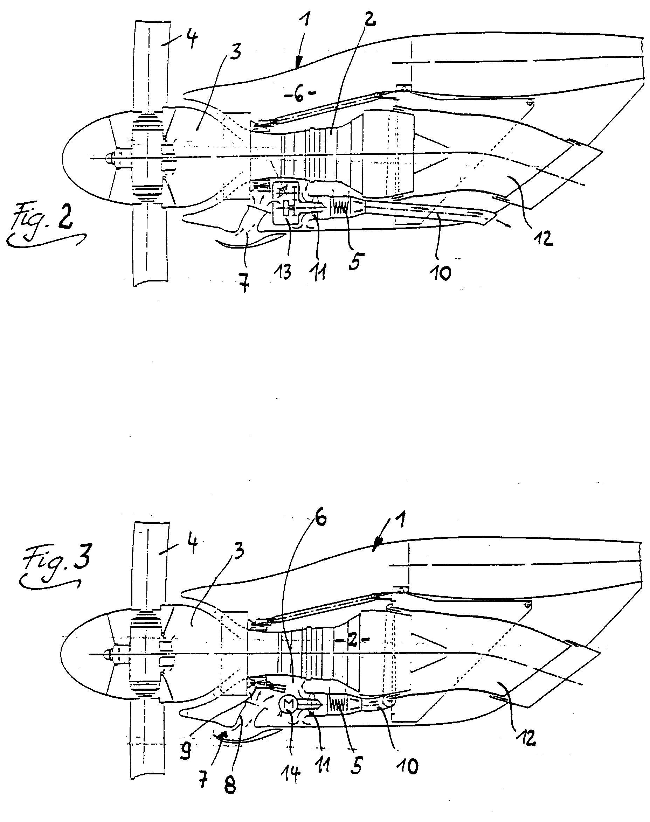

Nachdem der Kühlluftstrom die Aggregate 9 überstrichen hat, gelangt er zum Ölkühler 5 und von diesem aus als Abluftstrom - wie durch Pfeile dargestellt - über einen Luftführungskanal 10 in die Umgebung. Für die geschilderte Führung des Kühlluftstromes sorgt dabei eine mit der Bezugsziffer 11 bezeichnete, als Gebläse ausgebildete Kühlluft-Fördereinrichtung, die dem Luftführungskanal 10, der den Ölkühler 5 - im weitesten Sinne - aufnimmt, zugeordnet ist.
Bei den Ausführungsbeispielen nach den Figuren 1, 2 wird das Gebläse bzw. die Kühlluft-Fördereinrichtung 11 unter Zwischenschaltung einer nicht gezeigten Schaltkupplung von der der Gasturbine 2 zugeordneten, im Gondel-Innenraum 6 angeordneten Gearbox 13 angetrieben, und zwar über eine Ausgangswelle derselben.
Beim Ausführungsbeispiel nach Fig. 3 wird das Gebläse bzw. die Kühlluft-Fördereinrichtung 11 über einen Elektromotor 14 angetrieben.

Bei den Ausführungsbeispielen nach den Fig. 1, 3 mündet der die Wärmetauscher-Abluft abführende Luftführungskanal 10 im Turbinen-Abluftkanal 12, während beim Ausführungsbeispiel nach Fig. 2 der Luftführungskanal 10 für die Ölkühlerabluft direkt in der Umgebung mündet, so daß hier keine unerwünschte Beeinflussung der Strömungsverhältnisse im Turbinen-Abluftkanal 12 auftritt.

Allen Ausführungsbeispielen ist gemein, daß der über die Eintrittsöffnung 7 in den Gondel-Innenraum 6 gelangende Kühlluftstrom zunächst über die zu kühlenden Aggregate 9 geführt wird und erst danach zum abseits der Eintrittsöffnung 7 angeordneten Ölkühler 5 gelangt. Von diesem aus wird der Luftstrom als Ölkühler-Abluft dann bei allen Ausführungsbeispielen über den Luftführungskanal 10 in die Umgebung abgeführt, ohne daß hierbei eine merkliche Erwärmung des Gondel-Innenraumes 6 stattfindet. Gefördert wird der Kühlluftstrom dabei stets von der dem Luftführungskanal 10 zugeordneten Kühlluft-Fördereinrichtung 11.

## Patentansprüche

1. Turboprop-Triebwerk mit einer in der Triebwerks-Gondel (1) vorgesehenen Eintrittsöffnung (7) für Kühlluft für den Gondel-Innenraum (6) und für einen in diesem angeordneten Flüssigkeits-Luft-Wärmetauscher (5), mit einer Kühlluft-Fördereinrichtung (11), sowie mit einem den Flüssigkeits-Luft-Wärmetauscher (5) aufnehmenden und die Wärmetauscher-Abluft abführenden Luftführungskanal (10),
dadurch gekennzeichnet, daß sich an die Kühlluft-Eintrittsöffnung (7) ein Luftleitkanal (8) anschließt, der auf zumindest ein zu kühlendendes Aggregat (9) hingerichtet ist, und daß die Kühlluft-Fördereinrichtung (11) als ein dem Wärmetauscher (5) vorgelagertes, im Luftführungskanal (10) angeordnetes Gebläse ausgebildet ist.

2. Turboprop-Triebwerk nach Anspruch 1,
dadurch gekennzeichnet, daß das Gebläse (11) elektromotorisch oder unter Zwischenschaltung einer Schaltkupplung von einer Getriebeanordnung (13) für den Hilfsaggregateantrieb angetrieben ist.

3. Turboprop-Triebwerk nach einem der vorangegangenen Ansprüche,
dadurch gekennzeichnet, daß an der Kühlluft-Eintrittsöffnung (7) der Triebwerks-Gondel (1) eine Abscheidevorrichtung für Wasser und/oder Partikel vorgesehen ist.

## Claims

1. A turboprop engine with an entry opening (7) provided in the engine nacelle (1) for cooling air for the nacelle interior (6) and for a liquid-air heat exchanger (5) arranged therein, with a cooling air conveying device (11), and with an air duct (10) taking air to the liquid-air heat exchanger (5) and leading air from the heat exchanger exhaust,
characterised in that an air duct (10) connects to the cooling air entry opening (7), which is directed onto at least one piece of equipment (9) to be cooled, and that the cooling air conveying device 11) is configured as a blower arranged in the air duct (10) before the heat exchanger (5).

2. A turboprop engine according to Claim 1,
characterised in that the blower (11) is driven by electric motor or with the interposition of a clutch coupling from a drive arrangement (13) for auxiliary equipment drive.

3. A turboprop engine according to one of the foregoing Claims,
characterised in that a separating device for water and/or particles is provided at the cooling air entry opening (7) of the engine nacelle (1).

## Revendications

1. Turbopropulseur comportant un orifice d'entrée (7) réalisé dans la nacelle (1) du moteur pour recevoir l'air de refroidissement de l'intérieur (6) de la nacelle et pour un échangeur de chaleur liquide/air (5) logé dans la nacelle, une installation de transfert d'air de refroidissement (11) ainsi qu'un canal de guidage d'air (10), recevant l'échangeur de chaleur liquide/air (5) et l'air de sortie de l'échangeur de chaleur passant par le canal d'évacuation d'air (10),
caractérisé en ce qu'
- un canal de guidage d'air (8) fait suite à l'orifice d'entrée d'air de refroidissement (7), ce canal pénètre au moins dans l'ensemble à refroidir (9) et
- l'installation de transfert d'air de refroidissement (11) comporte une machine soufflante montée dans le canal de refroidissement (10) en amont de l'échangeur de chaleur (5).

2. Turbopropulseur selon la revendication 1,
caractérisé en ce que
la machine soufflante (11) est entraînée par un moteur électrique ou par un embrayage intermédiaire débrayable, à partir d'un ensemble de transmission (13) pour l'entraînement des ensembles auxiliaires.

3. Turbopropulseur selon l'une quelconque des revendications précédentes,
caractérisé en ce que
l'orifice d'entrée d'air de refroidissement (7) de la nacelle (1) du moteur est équipé d'un dispositif de séparation pour séparer l'eau et/ou les particules.
